(19) Europäisches Patentamt

European Patent Office

Office européen des brevets

(11) **EP 1 394 959 B1**

(12) **EUROPEAN PATENT SPECIFICATION**

(45) Date of publication and mention
of the grant of the patent:
**24.05.2006 Bulletin 2006/21**

(51) Int Cl.:
***H04B 1/707*** *(2006.01)*

(21) Application number: **02445115.5**

(22) Date of filing: **02.09.2002**

(54) **A method for multi-path radio receiving and a receiver adapted for the method**

Verfahren zum Mehrwegfunkempfang und ein an dieses Verfahren angepasster Empfänger

Procédé de réception radio en présence de propagation par trajets multiples et récepteur adapté pour la mise en oeuvre de ce procédé

(84) Designated Contracting States:
**AT BE BG CH CY CZ DE DK EE ES FI FR GB GR IE IT LI LU MC NL PT SE SK TR**

(43) Date of publication of application:
**03.03.2004 Bulletin 2004/10**

(73) Proprietor: **TELEFONAKTIEBOLAGET LM ERICSSON (publ)**
**164 83 Stockholm (SE)**

(72) Inventors:
• **Tetsufumi, Shima**
**Kubiri, Yokosuka,239,0828 Kanakawa (JP)**

• **Zhongping, Zhang**
**187 45 Täby (SE)**

(74) Representative: **Forsberg, Ulrika S.**
**Ericsson AB**
**Patent Unit Radio Networks**
**164 80 Stockholm (SE)**

(56) References cited:
**EP-A- 1 067 700        EP-A- 1 091 501**
**US-A1- 2002 094 018**

EP 1 394 959 B1

**Description**

## TECHNICAL FIELD OF THE INVENTION

The present invention relates to a radio receiver and more specifically it relates to a searcher arranged to estimate multipath propagation delays on the radio link from a transmitter to the receiver.

## DESCRIPTION OF RELATED ART

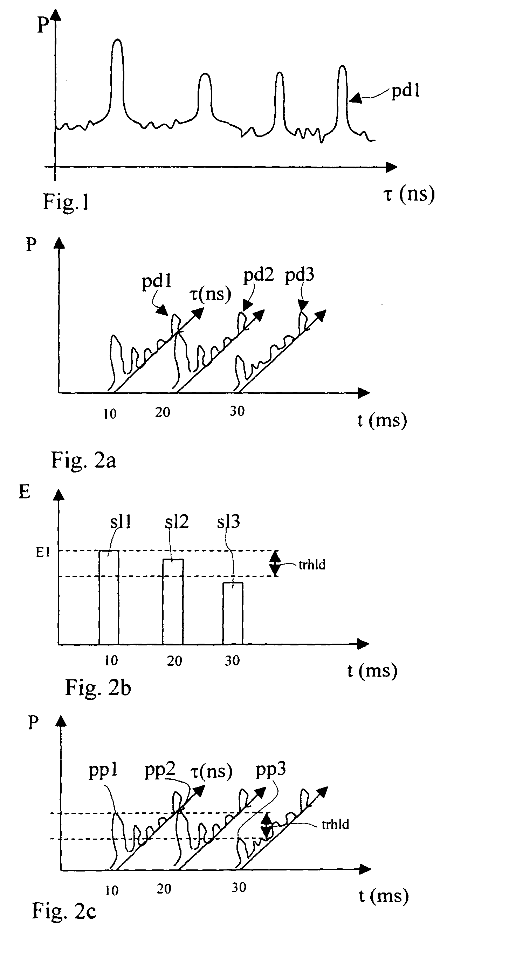

A radio receiver for a DS/CDMA (Direct Sequence Code Division Multiple Access) signal includes a searcher with a channel estimator for estimating the radio channel for a signal sent from a transmitter to the receiver. Figure 1 is a graph pd1 illustrating the estimated radio channel at a specific time instant. This graph is also commonly called power delay profile pd1 because received power from a fictitious Dirac pulse is showed (along the P-axis) as a function of time delay (along the $\tau$-axis), and peaks in the curve correspond to signal power received on the various propagation paths. Hence, in the power delay profile pd1 is found the various propagation paths and their corresponding propagation delays of the multi-path signal. The information on the number of peaks and their time positions is used for selecting an appropriate number of fingers in a Rake receiver. Each finger uses the respective propagation delay for demodulating the corresponding propagation path. To this end the resolution of the propagation delays of the various paths need be in the magnitude of nano ($10^{-9}$) seconds.

The multipath radio channel constantly changes, due to the transmitter or receiver are moving or because obstacles in the propagation path are moving. In general the higher speed of the movements the more rapid are the changes of the radio channel. In order to track these changes the power delay profile is regularly updated, generally at intervals about 40 ms. Figure 2 relates to a radio link were the signal stream is sent as a stream of frames of 10 ms duration. Figure 2a is an three dimensional coordinate system, the dimensional axis of which corresponding to time t measured in ms, delay $\tau$, i.e. time measured in ns and power P. The t axis of the coordinate system of figure 2 is divided into periods of 10 ms corresponding to received frames. For each frame received the power delay profile pd1-pd3 is calculated and the power P (P-axis) is disclosed as a function of the delay $\tau$.

Updating, i.e. recalculating the power delay profile is a complicated task and requires a lot of processing capacity.

EP 0794627 discloses a radio receiver for a DS/CDMA signal and that includes a searcher common in the art.

A radio channel impulse response estimation consists of two parts, estimations of power delay profile and the phase information on radio channel. The power delay profile is mainly used for finding the best timing for received signal power maximisation, while the phase information is mainly used to estimate signals distortion through radio channel for correct signal detection. Both the estimation of the timing and the radio distortion need be frequently updated to correspond to changes of radio channel. It is well known in the art how to perform a radio channel impulse response estimation, it is the task of the channel estimator in the searcher or in a separate part of the radio receiver.

US 2002/0094018 discloses a CDMA receiver in which different sections of the power delay profile are updated with a different frequency, based on the power distribution of said sections.

## SUMMARY OF THE INVENTION

The present invention addresses the problem of dimensioning the searcher resources in a radio receiver. On one hand, the the multipath delay profile need be updated often enough to track changes in the delay profile. On the other hand, estimating the delay profile takes a lot of capacity with respect to computing and hardware resources, and hence it should be avoided to update the delay profile more often than needed.

The aim of the present invention is to avoid updating the delay profile when it is not needed for correcting the correlation of the Rake receiver.

The present invention solves the problem by comparing the received signal power with that received when the last power delay profile was made and then make the update of power delay profile if the power has decreased below a certain level.

## DESCRIPTION OF THE DRAWINGS

Figure 1 shows a power delay profile produced by the searcher.

Figure 2a is a three dimensional coordinate system, disclosing the power delay profile for several radio frames received.

Figure 2b is a two dimensional coordinate system disclosing the power (energy?) collected over a delay period for each of several radio frames.

Figure 2c is a three dimensional coordinate system, disclosing the peak power delay for several radio frames received.

Figure 3 is a flow chart on the steps of the inventive method.

Figure 4 is a diagram of the autocorrelation function R of a channel impulse response.

Figure 5 is block diagram of some essential parts of a searcher.

**DESCRIPTION OF PREFERRED EMBODIMENTS**

The determination of when to recalculate the power delay profile will now be described with reference to figure 2. In a first step S1 a signal stream is received. The signal stream is continously received. A counter n is set to 1 in the following step S2. A next segment of the signal stream to be received is named segment{1}, in the following step S3. Next, in step S4, the received power P{1} of segment {1} is detected. The power delay profile is calculated in the following step S5. Thereupon the counter n is incremented by one, see step s6. In the next step, S7, the received power P{n} of a following segment of the signal stream is detected, i.e. that of segment{n}. In following step S8, the power P{n} of the latest received segment is compared to the power P{1} of the first segment, and if the latest power P{n} differs from the power P{1} of the first segment by a threshold value, then the second step S2 is performed. This is made because the power delay profile need be updated due to the decrease or increase in the received power P{n} and this is made in the steps following the second step S2.

If, however, the power P{n} of the latest received segment does not differ from the first power P{1} value by the threshold value, the counter n value is compared to a maximum value $n_{max}$ in step S8. The maximum value nmax is typically 20. If the counter n is equal to the maximum value $n_{max}$ then the second step S2, and the steps following that is performed. Thereby the power delay profile is recalculated to replace a version that has become too old, typically after 20 segments. If, however, the counter n is not equal to the maximum value $n_{max}$, the sixth step S6 and the following are performed in a loop, in order to compare the power of following segment to the power of the first segment.

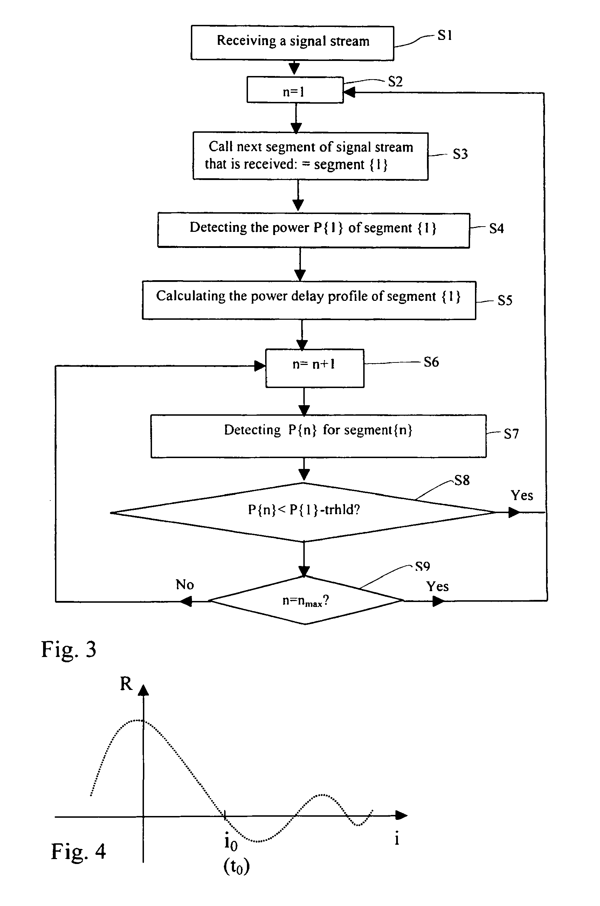

The present invention comprises several embodiments with respect to how to determine the power of a specific segment, i.e. the acts performed in the seventh step s7. These embodiments will be presented as when implemented in UTRAN (Universal Terrestrial Radio Access Network, 3GPP standard), as an example, however they can be implemented in any radio communication system based on CDMA or on TDMA technology. UTRAN specifies channel estimation to be made on the so called "pilot symbol" on the Dedicated Physical Control Channel for the purposes of calculating the power delay profile and estimating the radio channel impulse response. On the Dedicated Physical Control Channel time is divided into frames, often referred to as radio frames, following consecutive on each other. The radio frames have a length of 10 ms, and are scheduled into time slots. The "pilot symbol" is sent in a timeslot of each radio frame. The segments described with reference to figure 3 are typically 10 ms frames.

In order to describe the various embodiments further we will use the autocorrelation function of the power delay profile pd1. The autocorrelation function $R$ of the power delay profile pd1 for discrete times is mathematically expressed:

$$R_{mN+n}(i) = \max_{j}\left\{\sum_{l=0}^{L-1} h^{j^{\bullet}}{}_{mN+n-l}\, h^{j}{}_{mN+n+i-l}\right\}$$

Here, $m$ denotes slot index, $N$ denotes the number of samples in one slot, $n$ is the index of sample in a slot, $h$ denotes a radio channel impulse response estimation, $j$ is the index of channel path, $L$ is number of average and $i$ is the number of sample.

The received signal is sampled at intervals being a fraction of chip time, e.g. ¼ chip. Chip is the time unit of the spreading code in the DS-CDMA technology based radio interface of UTRAN often referred to as WCDMA.

A first embodiment of the present invention is illustrated in figure 2b, that discloses a staple diagram, with an energy axis E and a time axis t. Along the time axis are staples sl1-sl3, one for each received radio frame. The staples sl1-sl3 illustrates the pilot code energy received during a multi-path delay power period τ. Assuming that the power delay profile was calculated for the radio frame corresponding to the first of the staples sl1, the staples sl2-sl3 that follow are compared to the level of the first staple sl1, and the delay profile is recalculated for the next staple that differs from the first staple sl1 by a certain threshold value trhld. The threshold value trhld is for example 3 dB below or above the energy of the first staple sl1. In figure 2b the third staple sl3 is the first to decrease below this level and the power delay profile will be below recalculated for the corresponding frame. The staples to follow the third staple sl3 will be compared to the third staple sl3.

The mathematical formula for collecting the power over the multi-path delay period τ may be calculated for each frame according to expression:

$$E = \int_{0 \to \tau} P = \int_{0 \to \tau} Re\{R\}$$

The energy E is the power of the pilot code of one radio frame integrated over a propagation delay period τ of typically 200 ns. In the searcher this power is collected in an integrator during the period τ. Collecting power to energy is much easier to perform than computing the power delay profile pd1, because the energy is not computed as a function of the delay.

A second embodiment of detecting power is illustrated in figure 2c, that discloses the same coordinate system and power delay profiles pd1-pd3 as figure 2a. In figure 2c is also shown a striped line that indicates the peak power pp1 of the first delay profile pd1. It should be noted that not all of these power delay profiles pd1-pd3 will be calculated in the searcher. However, they indicate the multi-path power received. For each frame that is received the peak power pp3 is detected and compared to the peak power pp1 received when the power delay profile pd1 was last calculated. The power delay profile is recalculated when the peak magnitude of autocorrelation decreases a threshold value trhld (e.g. 3 dB), compared to the power peak pp1 value of the first frame.

An alternative method that does not form part of this invention as defined in the appended claims, for determining the interval for updating the power delay profile make use of the autocorrelation function R of the power delay profile. Figure 4 is a diagram of the autocorrelation function R as a function of sample i. The samples are closely related to time, as sample number divided by sample frequency results in time. In figure 4 the autocorrelation function R has its first zero crossing position at $i_0$, compared from zero, and this correponds to time $t_0$. According to the alternative method the updating interval is selected to be somewhat shorter than the time $t_0$ of the first zero crossing. The table discloses examples of updating interval to be selected for different zero crossing times $t_0$.

| Calculated $t_0$ in ms | Updating interval in ms |
|---|---|
| $t_0 > 500$ | 400 |
| $300 < t_0 <= 500$ | 200 |
| $100 < t_0 <= 300$ | 80 |
| $80 < t_0 <= 100$ | 50 |
| $60 < t_0 <= 80$ | 40 |
| $40 < t_0 <= 60$ | 30 |
| $20 < t_0 <= 40$ | 20 |
| $10 < t0 <= 20$ | 10 |
| $0 < t_0 <= 10$ | 10 |

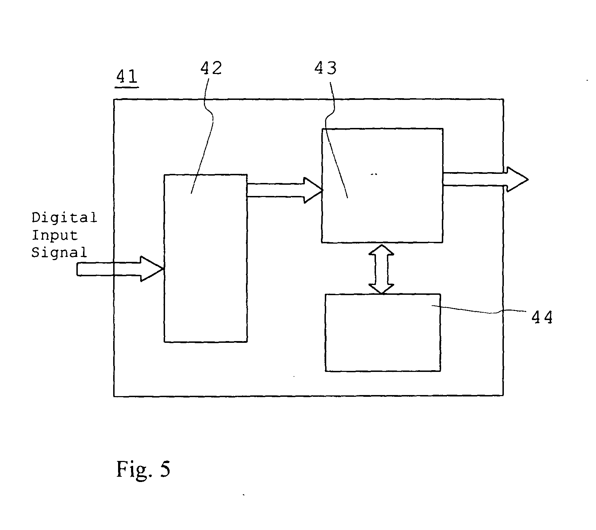

Figure 5 is a block diagram of a searcher 41 comprising a channel estimator 42, a processing unit 43 and a buffer 44. The channel estimator 42 has an input for receiving a sampled, digitalised signal stream. The processing unit 43 has connections to the channel estimator 42 and to the buffer 44, and controls these two units 42,44. The processing unit determines when to update the power delay profile according to the inventive method and performs the power delay profile calculation. It further selects the propagation paths that shall be demodulated in the Rake fingers, and tracks the variations in propagation delays and signal phase. The processing unit has an output for feeding the information on delay and phase for the Rake fingers.

In the description above the power delay profile and the calculation for selecting an appropriate interval for updating the delay profile is made with respect to the radio channel of just one user. In a radio base station receiver, the capacity of the searcher is shared by links to several users each with a radio channel to be estimated by a power delay profile. By use the inventive method, the searcher resources can be more effectively shared among the different users compared to if the searcher resources where used at fixed shares. In both a radio base station receiver and a mobile receiver, adapting the interval for updating the delay profile to the need thereof reduces the power consumption.

The present method for determining when to update the power delay profile is advantegous also for the Rake receiver, i.e. the demodulating part of the receiver, because it need not change its timing delays for demodulating the various signal paths apart from when it is needed. This is especially the case when the Rake receiver is configured to change timing delays in an interruption controlled manner and not at regular pre-determined timings.

If a signal impulse response is calculated, the power delay profile is a sub-calculatation. Accordingly the method described above for detecting when to make a recalculation may as well be used for determining when to make the recalculation of the signal impulse response of the radio link.

## Claims

1. A method suitable for a radio receiver arranged to repeatedly estimate the multi-path power delay profile of a received signal stream, comprising the steps of:

   computing (S5) the power delay profile on a first section of the received signal stream, and **characterised by** the further steps of;
   detecting (S4) the received power of the first section and of subsequent sections of the received signal stream;
   comparing (S8) the power of the subsequent sections of signal stream to the power of the first section of the signal stream; and
   recalculating (S5) the power delay profile when the power of one of the subsequent sections of the signal stream decreases below a threshold value relative to the detected power of the first section of the signal stream.

2. A method according to claim 1 wherein the detecting step comprises detecting the peak power of the first and subsequent parts of the signal stream.

3. A method according to claim 1 wherein the detecting step comprises detecting energy by integrating the power received during a multi-path delay interval and in the comparing and recalculating steps powers integrated during said interval are compared.

4. A method according to claim 1 wherein the signal stream is transmitted as a stream of radio frames and said section corresponds to a radio frame.

5. A method according to claim 4 wherein a pilot signal are transmitted in a timeslot being a subsection of said radio frame and the received power detected is that of the pilot signal.

6. A radio receiver with a unit (41) arranged to perform the method of claim 1 or any of the method claims dependent on claim 1.

## Patentansprüche

1. Für einen Funkempfänger geeignetes Verfahren, wobei der Funkempfänger dafür konfiguriert ist, wiederholt das Mehrwegleistungsverzögerungsprofil eines empfangenen Signalstromes zu schätzen, umfassend die folgenden Schritte:

   Berechnen (S5) des Leistungsverzögerungsprofils auf einem ersten Abschnitt des empfangenen Signalstromes, und **gekennzeichnet durch** folgende weitere Schritte:

   Erfassen (S4) der empfangenen Leistung des ersten Abschnitts und nachfolgender Abschnitte des empfangenen Signalstromes;
   Vergleichen (S8) der Leistung der nachfolgenden Abschnitte des Signalstromes mit der Leistung des ersten Abschnitts des Signalstromes; und
   Neuberechnen (S5) des Leistungsverzögerungsprofils, wenn die Leistung eines der nachfolgenden Abschnitte des Signalstromes unter einen Schwellenwert relativ zu der erfassten Leistung des ersten Abschnitts des Signalstromes abfällt.

2. Verfahren nach Anspruch 1, wobei der Erfassungsschritt das Erfassen der Spitzenleistung des ersten und nachfolgender Abschnitte des Signalstromes umfasst.

**3.** Verfahren nach Anspruch 1, wobei der Erfassungsschritt das Erfassen von Energie durch Integrieren der Leistung, die während eines Mehrwegverzögerungsintervalls empfangen wurde, umfasst und wobei während der Schritte des Vergleichens und des Neuberechnens Leistungen, die während dieses Intervalls integriert wurden, miteinander verglichen werden.

**4.** Verfahren nach Anspruch 1, wobei der Signalstrom als ein Strom aus Funkdatenübertragungsblöcken gesendet wird und der Abschnitt einem Funkdatenübertragungsblock entspricht.

**5.** Verfahren nach Anspruch 4, wobei ein Pilotsignal in einem Zeitschlitz gesendet wird, der einen Teilabschnitt des Funkdatenübertragungsblocks bildet, und die erfasste empfangene Leistung die Leistung des Pilotsignals ist.

**6.** Funkempfänger mit einer Einheit (41), die dafür konfigurier ist, das Verfahren nach Anspruch 1 oder nach einem der von Anspruch 1 abhängigen Verfahrensansprüche auszuführen.

**Revendications**

**1.** Procédé adapté à un récepteur radio agencé pour estimer de façon répétée le profil de retard de puissance par chemins multiples d'une suite de signaux reçus, comprenant les étapes qui consistent :

à calculer (S5) le profil de retard de puissance sur une première section de la suite de signaux reçus, et **caractérisé par** les autres étapes qui consistent :

à détecter (S4) la puissance reçue de la première section et de sections suivantes de la suite de signaux reçus ;
à comparer (S8) la puissance des sections suivantes de la suite de signaux à la puissance de la première section de la suite de signaux ; et
à recalculer (S5) le profil de retard de puissance lorsque la puissance de l'une des sections suivantes de la suite de signaux diminue en dessous d'une valeur de seuil par rapport à la puissance détectée de la première section de la suite de signaux.

**2.** Procédé selon la revendication 1, dans lequel l'étape de détection comprend la détection de la puissance de crête de la première partie et des parties suivantes de la suite de signaux.

**3.** Procédé selon la revendication 1, dans lequel l'étape de détection comprend la détection d'énergie par intégration de la puissance reçue pendant un intervalle de retard par chemins multiples et, dans les étapes de comparaison et de recalcul, des puissances intégrées pendant ledit intervalle sont comparées.

**4.** Procédé selon la revendication 1, dans lequel la suite de signaux est transmise sous la forme d'une suite de trames radio et ladite section correspond à une trame radio.

**5.** Procédé selon la revendication 4, dans lequel un signal pilote est transmis dans un créneau temporel qui est une sous-section de ladite trame radio et la puissance reçue détectée est celle du signal pilote.

**6.** Récepteur radio comportant une unité (41) agencée pour exécuter le procédé de la revendication 1 ou de l'une quelconque des revendications de procédé qui dépendent de la revendication 1.

Fig.1

Fig. 2a

Fig. 2b

Fig. 2c

Fig. 3

Fig. 4

Fig. 5